# EUROPÄISCHE PATENTANMELDUNG

(11) **EP 1 136 518 A1**
(43) Veröffentlichungstag der Anmeldung: **26.09.2001**
(21) Anmeldenummer: 01105401.2
(22) Anmeldetag: 12.03.2001
(51) Int. Cl.: C08J 5/18, C08K 3/00, B32B 27/34

(54) **Streifenfrei tiefziehbare und hochtransparente Polyamidfolie, ein Verfahren zu ihrer Herstellung und ihre Verwendung als Verpackungsmaterial**

(30) Priorität: 23.03.2000 DE 10014371
(71) Anmelder: Wolff Walsrode AG, 29655 Walsrode (DE)
(72) Erfinder: Eggers, Holger Dr., 29664 Walsrode (DE); Gasse, Andreas Dr., 29664 Walsrode (DE); Klein, Rudi, 29664 Walsrode (DE)
(74) Vertreter: Kutzenberger, Helga, Dr.

(57) **Zusammenfassung**

Beschrieben wird eine Tiefziehfolie enthaltend wenigstens eine Schicht (I) aus Polyamid enthaltend feste anisotrope Füllstoffe (A), dadurch gekennzeichnet, dass die Füllstoffe (A) in Schicht (I) im zahlengewichteten Mittel aller dispergierten Bestandteile der Füllstoffe (A) in wenigstens einer, für jeden dispergierten Bestandteil frei wählbaren Richtung (r1) eine Ausdehnung von nicht mehr als 10 nm aufweisen und in wenigstens einer anderen, zu (r1) senkrecht verlaufenden Richtung eine Ausdehnung von wenigstens dem 50-fachen der Ausdehnung in der Richtung (r1) aufweisen, die einzelnen Sphärolithe in Schicht (I) einen Abstand voneinander von im zahlenmäßigen Mittel nicht über 50 nm aufweisen und ihr Kern im zahlenmäßig überwiegenden Teil aller Sphärolithe nicht von einem Füllstoffpartikel (A) ausgemacht wird. Weiterhin wird die Verwendung dieser Folie zur Verpackung von Lebensmitteln beschrieben.

## Beschreibung

Die vorliegende Erfindung betrifft eine flexible polyamidhaltige Folie mit wenigstens einer Schicht aus Polyamid, die nanoskalige, anisotrope, nukleierend wirkende Füllstoffe enthält, die durch ein Folienherstellverfahren hergestellt wird, welches eine sehr rasche Abkühlung vorsieht, jedoch nicht als Kristallisationskeime zur Wirkung kommen. Die Polyamidschicht zeichnet sich durch ein extrem feinkristallines Gefüge aus. Die erfindungsgemäße Folie weist neben einem hervorragenden optischen Erscheinungsbild eine sehr gute Thermoformbarkeit auf. Die Erfindung umfaßt die Verwendung für den Tiefzug sowie die Verpackung von Lebensmitteln.

Polyamidhaltige Folien kommen in großem Umfang u.a. bei der Verpackung von Lebensmitteln zum Einsatz.

Vorteile des Werkstoffes Polyamid sind eine hohe mechanische Festigkeit, eine gute Barriere gegen Sauerstoff, Kohlendioxid und andere unpolare Gase sowie eine hohe Temperaturbeständigkeit und Kratzfestigkeit.

Eine für die Funktion der Folie in Verpackungsanwendungen zentrale Eigenschaft ist eine ansprechende Optik. Es ist ein hoher Glanz sowie eine geringe Trübung der polyamidhaltigen Folie gefordert.

Lebensmittel werden häufig auf Thermoform-Füll-Siegelmaschinen, auch Tiefziehmaschinen genannt, in Muldenpackungen aus einer thermogeformten Muldenfolie sowie einer glatt zulaufenden Deckelfolie verpackt. Beide Folien werden nach Tiefzug und Applikation des Füllgutes in die so hergestellte Mulde miteinander durch Heißsiegelung zu einem geschlossenen Container verbunden. Die Funktionsweise solcher Maschinen sowie der Aufbau auf solchen Maschinen bevorzugt verarbeiteter Folien ist beispielsweise in The Wiley Encyclopedia of Packaging Technology (Hrg. M. Bakker, D. Eckroth; John Wiley & Sons, 1986) sowie in Nentwig (Joachim Nentwig: Kunststoff-Folien, Carl Hanser Verlag 1994, München) niedergelegt.

Eine wichtige Anforderung in bezug auf das Tiefziehverhalten der Folie ist eine homogene Dehnung der Folie in den tiefgezogenen Bereichen. In vielen Fällen wird dies nicht erfüllt, sondern es bildet sich im Tiefzug eine im folgenden als Tiefzuganomalie bezeichnete Struktur aus, die unmittelbar nebeneinanderliegende und abrupt ineinander übergehende dicke und dünne Bereiche enthält. Die dicken und dünnen Bereiche können sich mehrfach hintereinander wiederholen, so dass das optische Erscheinungsbild der Verpackung nachhaltig gestört ist. Dieser Effekt ist in der Literatur im Zusammenhang mit Dehnversuchen beispielsweise in Kohan, Nylon Plastics Handbook, Hanser Verlag, 1995, S.296f, beschrieben und dort als "narrowing" oder "necking" bezeichnet. Er fällt danach umso deutlicher aus, je ausgeprägter die Fließgrenze des Polyamids ist. Eine Nukleierung erhöht dabei sowohl für PA6 als auch PA66 die Fließgrenze und läßt demnach eine erhöhte Neigung zur Tiefzuganomalie erwarten.

Erfahrungsgemäß kann dem unerwünschten Phänomen der Tiefzuganomalie mit dem Einsatz von Copolyamiden begegnet werden. In vielen Fällen sind jedoch Copolyamide nicht erwünscht. So zeigen sie beispielsweise in der Regel eine höhere Blockneigung und geringere Temperaturstabilität als Homopolyamide wie Polyamid 6 und sind nicht zuletzt wegen der aufwendigeren Einsatzstoffe und Herstellverfahren teurer als Homopolyamide.

Erfahrungsgemäß weisen weiterhin Flachfolien häufiger und deutlicher das Phänomen der Tiefzuganomalie auf als Blasfolien. In vielen Fällen wird jedoch aus ökonomischen Gründen das Flachfolienverfahren gegenüber dem Blasfolienprozeß bevorzugt. So liegt die Ausstoßleistung von Flachfolienanlagen regelmäßig deutlich höher und die Fertigungskosten entsprechend niedriger als bei vergleichbaren Blasfolienanlagen.

In vielen Anwendungen ist es von entscheidender Bedeutung, dass sich die Folie möglichst stark verformen läßt, d.h. sehr hohe Zieftiefen erreicht. Diese Eigenschaft wird im folgenden als "maximaler Tiefzug" bezeichnet. Ein quantitatives Maß ist im Zusammenhang mit der Bewertung der Beispiele dargelegt. Der maximale Tiefzug wird bei einem gegebenen Werkzeugformat dadurch nach oben begrenzt, dass die Folie während der Verformung platzt.

Polyamid ist ein teilkristallines thermoplastisches Polymer. Das sich in einer Folie einstellende Gefüge des Polyamid ist dabei in hohem Maße von den Verarbeitungsbedingungen sowie der Zusammensetzung des Polyamid abhängig.

Je langsamer die Abkühlgeschwindigkeit des Polyamids ist, desto größere kristalline Strukturen können sich durch eine Kristallisation herausbilden. Diese Strukturen stören um so mehr das optische Erscheinungsbild der Folie, je größer sie sind. Grobkristalline PA-Folien weisen daher eine unerwünscht hohe Trübung und einen ebenfalls unerwünscht niedrigen Glanz auf.

Bei einer schnellen Abkühlung aus der Schmelze hingegen wird durch die gegenüber anderen Thermoplasten wie beispielsweise Polyethylen verhältnismäßig langsame Kristallisation von Polyamid keine ausreichend hohe Kristallinität erzeugt. Die nicht auskristallisierte Folie läßt sich wegen ihrer unzureichenden Festigkeit und hohen Klebeneigung nur schwer im Produktionsprozeß beherrschen. So kommt es beispielsweise zum Kleben auf, insbesondere warmtemperierten, Walzen wie beispielsweise der Kaschierwalze, die üblicherweise bei höheren Temperaturen betrieben wird. Durch ihre Weichheit dehnt die amorphe Folie beim Ablösen von solchen Walzen lokal unterschiedlich und erhält damit eine schlechte Planlagequalität.

Die Zugabe fester Partikel im Größenbereich von unterhalb eines Mikrometers in polymere Matrizen und speziell Polyamide ist ebenfalls seit längerem bekannt. Solche Systeme werden in Konzentrationen zwischen etwa 0,3 und 10 Gewichts-% beschrieben. Als Vorteile ergeben sich bei höheren Anteilen erhöhte Steifigkeiten aufgrund der verstärkenden Wirkung der Füllstoffe sowie bei plättchenförmiger Struktur der verwendeten Füllstoffe auch eine höhere Sauerstoffbarriere aufgrund verlängerter Diffüsionswege durch die polymere Matrix. Insbesondere kommen hier Schichtsilikate zum Einsatz, die durch geeignete Behandlung in lagenweise aufgeschlossener Form in die Polyamidmatrix eingebunden werden können.

EP-A 358415 offenbart eine Folie aus einem Polyamidharz mit darin gleichmäßig dispergiertem Schichtsilikat, wobei die einzelnen Schichten des Schichtsilikats Dicken um 1 nm und Seitenlängen bis hinauf zu 1 µm aufweisen können. Die Schichten liegen in der Polyamidmatrix durch geeigneten Aufschluß separiert vor. Mit diesem Material in Konzentrationen zwischen 1,2 und 6,5 Gewichts-% Schichtsilikat hergestellte Folien zeichnen sich gegenüber solchen aus reinem Polyamid 6 durch eine deutlich erhöhte Sauerstoffbarriere und Steifigkeit aus. Die Gleiteigenschaften werden verbessert. Die Transparenz von einschichtigen amorph abgeschreckten Flachfolien sowie Blasfolien mit Wasserkühlung mit dem Aufbau Polyamid//Haftvermittler//PE-LD bleibt gegenüber reinem Polyamid 6 unverändert. Anhand aufgeführter Beispiele von PA6-Folien mit abgestuftem Gehalt an Schichtsilikat wird die signifikante Abnahme der Knickbruchfestigkeit und Zunahme der Steifigkeit im Bereich bis 3,0 Gewichts-% Silikat deutlich.

WO 93/04118, sowie WO 93/11190 und WO 93/04117 jeweils desselben Anmelders, offenbaren Polymer-Nano-Komposits mit ebenfalls plättchenförmigen Partikeln im Dickenbereich von wenigen Nanometern, die nicht durch Einpolymerisation sondern durch mechanische Einarbeitung gewonnen werden. Insbesondere werden Komposite aus PA6 und Montmorillonit bzw. PA6 und Silikaten beschrieben mit zwischen 0,27 und 9 Gewichts-% Füllstoffanteil. Messungen an Stäben aus entsprechendem Material ergeben bei einem Anteil von 0,27% Silikat jedoch noch keine Erhöhung der Biegefestigkeit. Diese Materialien lassen sich ebenfalls zu Folien verarbeiten. Vorteilhaft ist in diesem Fall eine parallele Ausrichtung der plättchenförmigen Partikeln zur Folienoberfläche. Es werden Anwendungen als Monofolie sowie die Möglichkeit, Mehrschichtfolien herzustellen, beschrieben. Dabei können die aus diesem Material gefertigten Folien optional gereckt werden, um eine noch bessere Orientierung der Nanopartikeln zu erreichen. Hauptvorteil solcher Folien gegenüber solchen ohne nanoskalige Partikeln ist eine höhere Steifigkeit, die jedoch stets mit einer deutlich herabgesetzten Dehnfähigkeit einhergeht. Letzteres ist für die Anwendung als Tiefziehfolie unerwünscht.

EP-A 818508 offenbart eine Mischung aus 60-98% PA MXD6 mit 2-40% eines aliphatischen Polyamids, das wiederum inorganische Partikeln im Größenbereich von Nanometern enthält. Es werden Mischungen insbesondere mit PA 6 als aliphatischem Polyamid beschrieben. Daneben werden Mehrschichtfolien als daraus herstellbare Formteile beschrieben. Sämtliche genannten Aufbauten weisen als Vorteil eine hohe Sauerstoffbarriere auf, die auch durch eine Sterilisation nicht beeinträchtigt wird. Gegenüber einer Flachfolie aus reinem PA6 weist eine erfindungsgemäße Folie mit dem Aufbau PA 6//(80% PA MXD6 + 20% PA 6 mit Nanoteilchen)//PA 6 keine nennenswerte Verbesserung der Transparenz auf. Hauptnachteil solcher Strukturen mit einem hohen Anteil von PA MXD6 ist wiederum die geringe Knickbruch- und Durchstoßfestigkeit dieses Materials.

EP-A 810259 beschreibt ebenfalls eine Polyamidformmasse mit nanodispersen Füllstoffen. Durch Zugabe genügend feinteiliger Oxide, Oxihydrate oder Carbonate kann die dort gewünschte Barrierewirkung des Polyamid verbessert werden. Die Teilchen haben bevorzugt einen Durchmesser von weniger als 100 nm und werden in Konzentrationen von 0,1 bis 10 Gewichts-%, bevorzugt zwischen 1 bis 3 Gewichts-% eingesetzt. Das Patent beschreibt auch mehrschichtige Folien mit wenigstens einer Schicht aus dieser Formmasse zur Verbesserung der Sauerstoffsperre. Die optischen Eigenschaften einer Folie aus einem mit 1 Gewichts-% Silikat gefüllten Polyamid 6 verschlechtern sich jedoch gegenüber dem nicht additivierten System signifikant. Ebenso verschlechtert sich die Reißdehnung, und der Zugmodul verringert sich.

Es stellte sich angesichts des Standes der Technik die Aufgabe, eine flexible polyamidhaltige Tiefziehfolie bereitzustellen, die bei hervorragenden optischen Eigenschaften eine sehr gute Thermoformbarkeit, insbesondere ohne das Auftreten einer Tiefziehanomalie in Form von alternierenden dünnen und dicken Streifen, aufweist. Sie soll auf üblichen Anlagen zur Herstellung von Folien, insbesondere auf Flachfolienanlagen, sicher herstellbar sein.

Erfindungsgemäß gelang dies durch eine Tiefziehfolie enthaltend wenigstens eine Schicht (I) aus Polyamid enthaltend feste anisotrope Füllstoffe (A), dadurch gekennzeichnet, dass die Füllstoffe (A) in Schicht (I) im zahlengewichteten Mittel aller dispergierten Bestandteile der Füllstoffe (A) in wenigstens einer, für jeden dispergierten Bestandteil frei wählbaren Richtung (r1) eine Ausdehnung von nicht mehr als 10 nm aufweisen und in wenigstens einer anderen, zu (r1) senkrecht verlaufenden Richtung eine Ausdehnung von wenigstens dem 50-fachen der Ausdehnung in der Richtung (r1) aufweisen, die einzelnen Sphärolithe in Schicht (I) einen Abstand voneinander von im zahlenmäßigen Mittel nicht über 50 nm aufweisen und ihr Kern im zahlenmäßig überwiegenden Teil aller Sphärolithe nicht von einem Füllstoffpartikel (A) ausgemacht wird. Bevorzugt ist die Verankerung der Füllstoffe (A) in der Schicht (I) so ausgeprägt, dass bei einer Abkühlung der Schicht (I) aus dem vollständig aufgeschmolzenen Zustand mit einer Abkühlrate zwischen 10° und 20°C pro Minute kristalline Strukturen entstehen, die von der Oberfläche der Füllstoffe (A) ausgehen.

In bevorzugter Form beträgt der Anteil der Füllstoffe (A) in Schicht (I) zwischen 0,01% und 4%, bezogen auf das Gesamtgewicht der Schicht (I), in noch weiter bevorzugter Form zwischen 0,05% und 1,0%, bezogen auf das Gesamtgewicht der Schicht (I), in noch weiter bevorzugter Form zwischen 0,1% und 0,5%, bezogen auf das Gesamtgewicht der Schicht (I).

Hohe Anteile der anisotropen Füllstoffe erleichtern wesentlich die Produzierbarkeit der Folie auf Flachfolienanlagen in dem Sinne, dass der Folie auch bei schneller Abkühlung eine ausreichende Festigkeit verliehen wird. Bei Anteilen der anisotropen Füllstoffe oberhalb von etwa 1,0 Gewichts-% erweist sich die maximale Ziehtiefe der Folie jedoch als gering. Bei zu niedrigen Anteilen der anisotropen Füllstoffe wird die Folie zu weich und läßt sich nicht sicher und ohne Dehnen und nachfolgende Einbußen in der Planlage über die Produktionsmaschine, insbesondere über warmtemperierte Walzen, führen.

Isotrope oder nicht in genügendem Maße anisotrope Füllstoffe führen nicht zu der gewünschten Verbesserung hinsichtlich der sicheren Produzierbarkeit der Folie.

Die erfindungsgemäße Folie kann zusätzlich zu Schicht (I) eine oder mehrere weitere polyamidhaltige Schichten enthalten. In bevorzugter Form ist eine weitere polyamidhaltige Schicht dadurch gekennzeichnet, dass die Füllstoffe (A) in Schicht (I) im zahlengewichteten Mittel aller dispergierten Bestandteile der Füllstoffe (A) in wenigstens einer, für jeden dispergierten Bestandteil frei wählbaren Richtung (r1) eine Ausdehnung von nicht mehr als 10 nm aufweisen und in wenigstens einer anderen, zu (r1) senkrecht verlaufenden Richtung eine Ausdehnung von wenigstens dem 50-fachen der Ausdehnung in der Richtung (r1) aufweisen, die einzelnen Sphärolithe in Schicht (I) einen Abstand voneinander von im zahlenmäßigen Mittel nicht über 50 nm aufweisen und ihr Kern im zahlenmäßig überwiegenden Teil aller Sphärolithe nicht von einem Füllstoffpartikel (A) ausgemacht wird, die Verankerung der Füllstoffe (A) in der Schicht (I) so ausgeprägt ist, dass bei einer Abkühlung der Schicht (I) aus dem vollständig aufgeschmolzenen Zustand mit einer Abkühlrate zwischen 10° und 20°C pro Minute kristalline Strukturen entstehen, die von der Oberfläche der Füllstoffe (A) ausgehen, dass der Anteil der Füllstoffe (A) in Schicht (I) zwischen 0,01% und 4%, bezogen auf das Gesamtgewicht der Schicht (I), beträgt.

Schicht (I) und gegebenenfalls vorhandene weitere polyamidhaltige Schichten können übliche Additive enthalten.

Bevorzugt ist eine Ausführung der erfindungsgemäßen Folie, in der Schicht (I) eine Außenschicht bildet. In einer solchen Ausführung enthält Schicht (I) bevorzugt als Antiblockmittel bekannte feste anorganische Partikel, die aus der Oberfläche der Schicht (I) hervortreten und auf diese Weise das Gleitverhalten der Folie verbessern. Hierfür geeignet sind Siliziumoxid, Calciumcarbonat, Magnesiumsilikat, Aluminiumsilikat, Calciumphosphat, Talkum und dergleichen. Bevorzugt kommt daraus Siliciumdioxid zum Einsatz. Wirksame Mengen liegen im Bereich von 0,1 bis 4 Gewichts-%, vorzugsweise 1 bis 2 Gewichts-%. Die mittlere Teilchengröße liegt zwischen 1 und 10 µm, bevorzugt 2 und 7 µm, wobei hier Teilchen mit kugelförmiger Gestalt besonders geeignet sind. Andere Additive, die die Gleitfähigkeit der Schicht (I), auch in Zusammenwirken mit den genannten festen, als Antiblockmittel bekannten, Partikeln verbessern, sind die üblicherweise als Gleitmittel bezeichneten höheren aliphatischen Säureamide, höhere aliphatische Säureester, Wachse, Metallseifen sowie Polydimethylsiloxane. Die wirksame Menge an Gleitmittel liegt im Bereich von 0,01 bis 3 Gewichts-%, vorzugsweise 0,02 bis 1 Gewichts-%. Besonders geeignet ist der Zusatz von höheren aliphatischen Säureamiden im Bereich von 0,01 bis 0,25 Gewichts-%. Ein insbesondere für Polyamid geeignetes aliphatisches Säureamid ist Ethylenbisstearylamid.

Schicht (I) sowie die gegebenenfalls vorhandenen weiteren polyamidhaltigen Schichten enthalten in bevorzugter Form neben Polyamid keine weiteren thermoplastischen Materialien. Das Schicht (I) sowie die gegebenenfalls vorhandenen weiteren polyamidhaltigen Schichten jeweils ausmachende Polyamid enthält in bevorzugter Form jeweils eine Mischung aus verschiedenen Polyamiden mit wenigstens 90 Gewichts-% Polyamid 6 oder ein Copolyamid mit wenigstens 90 Gewichtsprozent aus ε-Caprolactam gebildeter Einheiten. Neben Polyamid 6 können Polyamide ausgewählt aus der Gruppe umfassend Polyamid 10, Polyamid 12, Polyamid 66, Polyamid 610, Polyamid 6I, Polyamid 612, Polyamid 6/66, Polyamid 6I/6T, Polyamid MXD6, Polyamid 6/6I, Polyamid 6/6T, Polyamid 6/IPDI oder andere aliphatische oder aromatische Homo- und Copolyamide oder Mischungen daraus verwendet werden. Als besonders günstig erweist es sich, in Schicht (I) sowie in den gegebenenfalls vorhandenen weiteren polyamidhaltigen Schichten, neben Polyamid 6 kein weiteres Polyamid zu verwenden.

Bevorzugt ist ein Gefüge der Schicht (I), dessen Kristallite möglichst klein sind und nicht von der Oberfläche der in Schicht (I) dispergierten anisotropen Partikeln ausgehen. Transkristalline Bereiche, insbesondere wenn sie von der Oberfläche der in Schicht (I) dispergierten anisotropen Partikeln ausgehen, erweisen sich als für den homogenen Tiefzug ohne das Auftreten einer Tiefzuganomalie sowie für einen hohen maximalen Tiefzug ungünstig. Bevorzugt ist eine Kristallitgröße von im zahlengewichteten Mittel aller Kristallite höchstens 25 nm.

Die erfindungsgemäße Folie kann zur Erleichterung der Heißsiegelbarkeit eine einschichtige oder mehrschichtige Siegelschicht, auf einer Außenseite der mehrschichtigen Folie enthalten. Die Siegelschicht bildet somit die dem Füllgut zugewandte Innenseite der Mehrschichtfolie. Die Siegelschicht enthält in bevorzugter Form die üblicherweise als Siegelmedium verwendeten Polymere oder Mischungen aus Polymeren aus der Gruppe umfassend Copolymerisate aus Ethylen und Vinylacetat (E/VA), besonders bevorzugt mit einem Vinylacetat-Gehalt, bezogen auf das Gesamtgewicht des Polymers, von höchstens 20%, Copolymerisate aus Ethylen und ungesättigten Estern wie Butylacrylat oder Ethylacrylat (E/BA bzw. E/EA), Copolymerisate aus Ethylen und ungesättigten Carbonsäuren (E/AA, E/MAA), besonders bevorzugt mit einem Gehalt des Carbonsäurecomonomers, bezogen auf das Gesamtgewicht des Polymers, von höchstens 15%, in noch weiter bevorzugter Form höchstens 8%, Salze der Copolymerisate aus Ethylen und ungesättigten Carbonsäuren, insbesondere E/MAA, (Ionomere), besonders bevorzugt mit einem Gehalt des Carbonsäurecomonomers, bezogen auf das Gesamtgewicht des Ionomers, von höchstens 15%, in noch weiter bevorzugter Form höchstens 10%, Polyethylen niedriger Dichte (PE-LD), besonders bevorzugt in einer Dichte von wenigstens 0,91 g/cm³ und höchstens 0,935 g/cm³ , Polyethylen hoher Dichte (PE-HD), Copolymerisate (PE-LLD) aus Ethylen und α-Olefinen mit wenigstens 3 C-Atomen, beispielsweise Buten, Hexen, Octen, 4-Methyl-1-Penten. Die Copolymerisate (PE-LLD) aus Ethylen und α-Olefinen können mit konventionellen Katalysatoren oder mit Metallocen-Katalysatoren hergestellt sein. Besonders bevorzugt sind daraus Copolymerisate (PE-LLD) aus Ethylen und α-Olefinen mit einer Dichte von wenigstens 0,90 g/cm³ und höchstens 0,94 g/cm³.

Die erfindungsgemäße Mehrschichtfolie kann zusätzlich zu Schicht (I) sowie den gegebenenfalls vorhandenen weiteren polyamidhaltigen Schichten und gegebenenfalls zur Siegelschicht auch eine oder mehrere EVOH-haltige Schichten zur Verbesserung der Sauerstoffsperreigenschaften enthalten, wobei die EVOH-haltigen Schichten bevorzugt wenigstens 50 Gewichts-%, bezogen auf das Gesamtgewicht der jeweiligen EVOH-haltigen Schicht, eines EVOH mit wenigstens 85 und höchstens 40 Mol-% Vinylacetat, das zu wenigstens 90% verseift ist, enthalten. In einer besonders bevorzugten Form ist eine EVOH-haltige Schicht zwischen zwei polyamidhaltigen Schichten plaziert.

Die erfindungsgemäße Folie kann zusätzlich zu Schicht (I) sowie den gegebenenfalls vorhandenen weiteren polyamidhaltigen Schichten, der Siegelschicht und/oder einer oder mehreren EVOH-haltigen Schicht(en) eine oder mehrere haftvermittelnde Schichten enthalten. Eine solche haftvermittelnde Schicht ist bevorzugt ein Kaschierklebstoff auf Basis von Polyurethanen oder Polyesterurethanen oder ein extrudierbarer Haftvermittler.

Zusätzlich zu Schicht (I) sowie den gegebenenfalls vorhandenen weiteren polyamidhaltigen Schichten, der Siegelschicht, einer oder mehreren EVOH-haltigen Schicht(en) und/oder einer oder mehrerer haftvermittelnder Schicht(en) kann die erfindungsgemäße Mehrschichtfolie noch weitere polymere Schichten enthalten.

Die erfindungsgemäße Mehrschichtfolie läßt sich bevorzugt auf Flachfolienanlagen herstellen. Dabei besteht die Möglichkeit, alle oder einen Teil der Schichten gemeinsam zu coextrudieren, d.h. die Polymere dieser Schichten als Schmelzeströme zusammenzuführen und in geschmolzener Form durch eine gemeinsame Düse strömen zu lassen.

Günstig ist die Herstellung der Schicht(en) (I) sowie gegebenenfalls vorhandener weiterer polyamidhaltiger Schichten als Flachfolie. Es können daneben weitere Schichten, insbesondere die EVOH-haltigen Schichten, in Coextrusion mit Schicht (I) sowie gegebenenfalls vorhandener weiterer polyamidhaltiger Schichten hergestellt werden.

Um das Gefüge von Schicht (I) der erfindungsgemäßen Folie zu erhalten, muß die diese Schicht enthaltende Schmelze nach der Extrusion rasch abgekühlt werden.

Dies kann beim Flachfolienverfahren durch genügend tiefe Gießwalzentemperaturen, bevorzugt sind Temperaturen unter 70°C, weiter bevorzugt 50°C, erreicht werden.
Dabei sollten Verweilzeiten von wenigstens 0,1 Sekunden eingehalten werden.

Die zur Erzielung des Gefüges erforderliche Abkühlung kann beim Schlauchfolienprozeß durch ein Abschrecken der Schmelze in einem Flüssigkeitsbad oder in Kontakt mit flüssigkeitsbenetzten Oberflächen oder in Kontakt mit fließenden Flüssigkeiten erreicht werden. Bevorzugt wird als Temperierflüssigkeit Wasser verwendet. Günstig sind Temperaturen der Flüssigkeit unter 40°C, bevorzugt unter 30°C. Dabei sollten Verweilzeiten von wenigstens 0,1 Sekunden eingehalten werden.

Die erfindungsgemäße Mehrschichtfolie kann auf der Außenseite oder zwischen zwei inneren Schichten mit einer Schicht aus einem Metall, bevorzugt Aluminium, einem Oxid eines Metalls oder eines Nichtmetalls, bevorzugt einem Oxid des Silizium, Eisen oder Aluminium, versehen werden. Diese Schicht weist vorzugsweise eine Dicke von 5 bis 200 nm auf. Bevorzugt ist wegen der glatten Oberfläche dieser Schichten eine Beschichtung auf einer Schicht (I), insbesondere in der Form, dass die Beschichtung nicht auf der Außenseite der Schicht (I) liegt. Günstig ist bei kaschierten Verbunden eine Beschichtung auf der dem Kaschierkleber unmittelbar zugewandten Seite einer Schicht (I).

Die erfindungsgemäße Folie kann auch auf der Außenseite, der Innenseite oder zwischen einzelnen Schichten bedruckt sein. Bevorzugt ist eine Bedruckung auf einer Schicht (I), insbesondere in der Form, dass die Beschichtung nicht auf der Außenseite der Schicht (I) liegt. Günstig ist bei kaschierten Verbunden eine Beschichtung auf der dem Kaschierkleber unmittelbar zugewandten Seite einer Schicht (I).

Überraschend wurde gefunden, dass die erfindungsgemäße Folie eine sehr gute Tiefziehfähigkeit bei gleichmäßigem Auszug ohne das Auftreten einer Tiefzuganomalie erreicht. Zusätzlich zeigt die Folie einen hohen maximalen Tiefzug.

Daneben läßt sie sich überraschend sicher insbesondere auf Flachfolienanlagen fertigen. Damit ist eine optimale Ausnutzung betrieblicher Ressourcen möglich.

Unerwartet ist dieses Ergebnis auch unter dem Gesichtspunkt, dass die guten produktionstechnischen Eigenschaften nicht auf die vorhandene und sehr ausgeprägte nukleierende Wirkung der verwendeten nanoskaligen Füllstoffe zurückzuführen sind.
Vielmehr hat sich das Kristallitgefüge unabhängig von den dispergierten Teilchen in der diese umgebenden Matrix gebildet. Dennoch erweist sich das Vorhandensein der Teilchen als produktionstechnisch unverzichtbar. Insbesondere sind überraschenderweise schon kleine Anteile der Teilchen in hohem Maße wirksam.

Die erfindungsgemäße Folie ist mit dem erreichten Eigenschaftsbild besonders gut für die Anwendung als Tiefziehfolie und im Verbund mit einer Siegelschicht insbesondere für Verpackungszwecke geeignet.

Die erfindungsgemäße Folie weist zusätzlich ein hervorragendes optisches Erscheinungsbild auf.

Ein weiterer Gegenstand der Erfindung ist daher insbesondere auch die Verwendung der Folie zur Verpackung von Lebensmitteln.

### Beispiele

An den erfindungsgemäßen Beispielen und den Vergleichsbeispielen wurden die folgenden Eigenschaften wie folgt bestimmt:
- Trans-Elektronenmikroskopische Untersuchung eines Querschnitts der Folie.
   Dazu wurde aus der PA-Außenschicht der Folie ein Dünnschnitt in Querrichtung entnommen und mit Formalin und OsO₄ kontrastiert. Es wurde anhand eines Ausdrucks mit der Vergrößerung 15000:1 das Gefüge wie folgt charakterisiert:
   - liegt ein im wesentlichen sphärolithisches Kristallgefüge vor und gehen die Sphärolithe nicht von den nanoskaligen, anisotropen Füllstoffpartikeln aus?
   - mittlerer zahlengewichteter Abstand der Sphärolithe bei vorliegendem im wesentlichen sphärolithischem Gefüge
- Die Produzierbarkeit als Flachfolie unter den genannten Bedingungen. Es wurde insbesondere die Stabilität der Folie bewertet. Dabei bedeutet Stabilität die Fähigkeit der Folie, durch die Anlage ohne Verkleben und Überdehnung führbar und insbesondere wickelbar zu sein. Dazu wurde der Bahnzug der Folie in Kombination mit der lokalen Dehngeschwindigkeit in der Produktionsanlage herangezogen. Dabei bedeutet der Bahnzug die Kraft, die die Folie während der laufenden Fertigung auf eine Kraftmeßwalze ausübt. Als Dehngeschwindigkeit wird die Voreilung zwischen zwei die Foliengeschwindigkeit definierenden Walzenpaaren, normiert mit der absoluten Umfangsgeschwindigkeit der den Bahnzug messenden Walze, verstanden. Ein hoher Bahnzug bei geringer Dehngeschwindigkeit bedeutet eine stabile Folie. Geringe Bahnzüge oder eine hohe Dehngeschwindigkeit sind gleichbedeutend mit einer weichen, instabilen Folie.
- Die Beurteilung der Tiefziehbarkeit erfolgte an einer Tiefziehmaschine vom Typ Tiromat 3000 der Fa. Alfa Laval. Die Folien wurden bei einer Tiefziehtemperatur von 90°C verarbeitet, eine Beheizung erfolgte durch Kontakt mit einer entsprechend temperierten Heizplatte. Heiz- und Formzeit betrugen jeweils 3 Sekunden. Die Muldengröße betrug 184 mm x 114 mm (Länge x Breite). Es wurde der maximale Tiefzug als die Werkzeugtiefe bestimmt, bei der noch über 90% aller Mulden ohne Aufplatzen herstellbar waren. Dabei wurde die Werkzeugtiefe durch verschieden hohe Einlagen im Werkzeug in Schritten von 5 mm variiert.
   Die mit einer Werkzeugtiefe von 60 mm tiefgezogenen Mulden wurden außerdem qualitativ hinsichtlich des Auftretens von Tiefzuganomalien bewertet. Dabei bedeutet
   - + :: keine oder schwach erkennbare Streifen in einem Bereich der Mulde
   - o :: deutlich erkennbare Streifen in einem Bereich der Mulde
   - - :: optisch stark störende Streifen in einem Bereich der Mulde
- Die Trübung nach ASTM D 1003.

### Versuchsreihe 1 (Vergleichsbeispiele):

Es wurden einschichtige Flachfolien aus Polyamid 6 mit einer Dicke von 50 µm auf einer Flachfolienanlage üblicher Bauart gefertigt. Die Gießwalze hat eine Umfangsgeschwindigkeit von 20 m/min. Die Kontaktzeit der Folie auf der Gießwalze betrug ca. 3 Sekunden. Die nachfolgende Kühlwalze wurde mit der gleichen Temperatur eingestellt wie die Gießwalze. Die Breite der Folien betrug 460 mm. Das verwendete Polyamid 6 enthält 600 ppm Ethylen-Bisstearylamid und ca. 150 ppm Talkum als Nukleierungsmittel. Es weist eine relative Lösungsviskosität von 3,8 in m-Kresol auf. Innerhalb der Versuchsreihe wurde die Temperatur der Gießwalze variiert.

In Vergleichsbeispiel 1.1 (V1.1) betrug die Gießwalzentemperatur 100°C.

In Vergleichsbeispiel 1.2 (V1.2) betrug die Gießwalzentemperatur 20°C.

Die Ergebnisse für Versuchsreihe 1 sind in untenstehender Tabelle zusammengefaßt:

| Merkmal (Einheit) | Beispiel (B) oder Vergleichsbeispiel (V) PA6, 50 µm | |
|---|---|---|
| | V1.1 | V1.2 |
| Temperatur Gießwalze (°C) | 100 | 20 |
| Trübung (%) | 5,8 | 0,4 |
| Sphärolithisches Gefüge? | ja | ja |
| Mittlerer Sphärolithabstand (nm) | 2000 | 20 |
| Bahnzug (N) | 68 | 14 |
| Dehngeschwindigkeit (%) | <1% | 4,3% |
| Maximaler Tiefzug (mm) | 80 | 85 |
| Tiefzuganomalie (Note) | - | + |

Während sich die mit heißer Gießwalze gefertigte Polyamidfolie V1.1 als nicht streifenfrei tiefziehbar erweist, verhält sich die mit kalter Gießwalze hergestellte Folie V1.2 auf der Produktionsanlage zu weich.

### Versuchsreihe 2:

Es wurden Flachfolien unter den Bedingungen von Vergleichsbeispiel 1.1 und 1.2 gefertigt. Als Polyamid wurde Polyamid 6, gefüllt mit 2 Gewichts-% eines anorganischen, anisotropen Füllstoffs, verwendet.

In Vergleichsbeispiel 2.1 und 2.2 wurde als Füllstoff plättchenförmiger Glimmer mit einem mittleren Partikeldurchmesser von 25 µm und einer mittleren Dicke von 0,5 µm verwendet. Der Glimmer wurde in einem Zweischneckenextruder im Polyamid dispergiert, das Extrudat anschließend granuliert, mit ungefülltem Polyamid 6 abgemischt und zu einer Flachfolie verarbeitet.

In Vergleichsbeispiel 2.3 und Beispiel 2.4 wurde ein Polyamid 6 mit einer relativen Lösungsviskosität von 3,6 in m-Kresol hingegen enthaltend 2 Gewichts-% nanoskalig in Plättchenform dispergiertes Schichtsilikat (Montmorillonit) verwendet. Die Montmorillonitpartikeln weisen Dicken von ca. 1 nm und Durchmesser von 100 bis 1000 nm auf und sind damit wesentlich feindisperser als die in Vergleichsbeispiel 2.1 und 2.2 verwendeten Füllstoffe.

Vergleichsbeispiele 2.1 und 2.3 wurden mit einer Gießwalzentemperatur von 100°C und Vergleichsbeispiel 2.2 und Beispiel 2.4 mit einer Gießwalzentemperatur von 20° gefertigt.

Die Charakterisierung der Folien ergab das in nachstehender Tabelle aufgeführte Ergebnis:

| Merkmal (Einheit) | Beispiel (B) oder Vergleichsbeispiel (V) PA6 mit 2% Füllstoff, 50 µm | | | |
|---|---|---|---|---|
| | V2.1 | V2.2 | V2.3 | B2.4 |
| Temperatur Gießwalze (°C) | 100 | 20 | 100 | 20 |
| Füllstoff | 2% Glimmer | 2% Glimmer | 2% Montmorillonit | 2% Montmorillonit |
| Trübung (%) | 9,8 | 7,4 | 2,0 | 1,8 |
| Sphärolithisches Kristallitgefüge? | Ja | ja | nein, transkristallin ab Füllstoffoberfläche | ja |
| Mittlerer Sphärolithabstand (nm) | 2000 | 20 | - | 20 |
| Bahnzug(N) | 71 | 19 | 94 | 76 |
| Dehngeschwindigkeit (%) | <1% | 4,1% | <1 | <1 |
| Maximaler Tiefzug (mm) | 80 | 80 | 65 | 70 |
| Tiefzuganomalie (Note) | 0 | + | - | + |

Während die mit kalter Gießwalze gefertigten Muster einen streifenfreien Tiefzug aufweisen, zeigen die mit heißtemperierter Gießwalze gefahrenen Muster V2.1 und V2.3 eine deutliche, im Falle des mit Montmorillonit gefüllten PA6 erhebliche, Tiefzuganomalie. Insbesondere Vergleichsbeispiel 2.3 weist zusätzlich Defizite hinsichtlich des maximalen Tiefzugs auf. Vergleichsbeispiel 2.2 ist auf der Produktionsanlage ähnlich wie abgeschrecktes ungefülltes PA6 zu weich. Beispiel 2.4 erweist sich als in allen Eigenschaften gut geeignet, der maximale Tiefzug ist jedoch schlechter als bei Standardfolien aus PA6 wie etwa Vergleichsbeipiel 1.1.

### Versuchsreihe 3:

Auf Basis von Beispiel 2.4, d.h. bei kalter Gießwalze, wurde der Gehalt an Montmorillonit variiert. Dazu wurde das 2% Montmorillonit enthaltende Polyamid 6 aus Beispiel 2.4 mit dem ungefüllten Polyamid 6 aus Versuchsreihe 1 so abgemischt, dass sich in der Mischung Anteile des Montmorillonit von 0,2%, 0,4% und 1,0 Gewichts-% ergeben. Die Folien werden in dieser Reihenfolge als Beispiele 3.1, 3.2 bzw. 3.3 geführt. Die Charakterisierung der Folien ergab das in nachstehender Tabelle aufgeführte Ergebnis. Dabei sind Vergleichsbeispiele 1.2 und Beispiel 2.4 mit 0% bzw. 2% Montmorillonit der Übersichtlichkeit halber in der Tabelle mit aufgenommen.

| Merkmal (Einheit) | Beispiel (B) oder Vergleichsbeispiel (V) PA6 mit aufgeschlossenem Montmorillonit, 50 µm | | | | |
|---|---|---|---|---|---|
| | V1.2 | B3.1 | B3.2 | B3.3 | B2.4 |
| Temperatur Gießwalze (°C) | 20 | 20 | 20 | 20 | 20 |
| Anteil Montmorillonit als Füllstoff (Gewichts-%) | 0 | 0,2 | 0,4 | 1,0 | 2,0 |
| Trübung (%) | 0,4 | 0,7 | 1,1 | 1,3 | 1,8 |
| Sphärolithisches Kristallitgefüge? | ja | ja | ja | ja | ja |
| Mittlerer Sphärolithabstand (nm) | 20 | 20 | 20 | 20 | 20 |
| Bahnzug (N) | 14 | 31 | 67 | 79 | 76 |
| Dehngeschwindigkeit (%) | 4,3% | <1 | <1 | <1 | <1 |
| Maximaler Tiefzug (mm) | 85 | 80 | 75 | 75 | 70 |
| Tiefzuganomalie (Note) | + | + | + | + | + |

Die Beipiele 3.1 bis 3.3 erweisen sich als in allen Punkten gut geeignet. Bezüglich des maximalen Tiefzugs stellen sie insbesondere eine weitere Verbesserung gegenüber Beispiel 2.4 dar.

## Patentansprüche

1. Tiefziehfolie enthaltend wenigstens eine Schicht (I) aus Polyamid enthaltend feste anisotrope Füllstoffe (A), **dadurch gekennzeichnet, dass** die Füllstoffe (A) in Schicht (I) im zahlengewichteten Mittel aller dispergierten Bestandteile der Füllstoffe (A) in wenigstens einer, für jeden dispergierten Bestandteil frei wählbaren Richtung (r1) eine Ausdehnung von nicht mehr als 10 nm aufweisen und in wenigstens einer anderen, zu (r1) senkrecht verlaufenden Richtung eine Ausdehnung von wenigstens dem 50-fachen der Ausdehnung in der Richtung (r1) aufweisen, die einzelnen Sphärolithe in Schicht (I) einen Abstand voneinander von im zahlenmäßigen Mittel nicht über 50 nm aufweisen und ihr Kern im zahlenmäßig überwiegenden Teil aller Sphärolithe nicht von einem Füllstoffpartikel (A) ausgemacht wird.

2. Folie nach Anspruch 1, **dadurch gekennzeichnet, dass** die Verankerung der Füllstoffe (A) in der Schicht (I) so ausgeprägt ist, dass bei einer Abkühlung der Schicht (I) aus dem vollständig aufgeschmolzenen Zustand mit einer Abkühlrate zwischen 10° und 20°C pro Minute kristalline Strukturen entstehen, die von der Oberfläche der Füllstoffe (A) ausgehen.

3. Folie nach einem der vorherigen Ansprüche, **dadurch gekennzeichnet, dass** der Anteil der Füllstoffe (A) in Schicht (I) zwischen 0,01% und 4%, bezogen auf das Gesamtgewicht der Schicht (I), beträgt.

4. Folie nach einem der vorherigen Ansprüche, **dadurch gekennzeichnet, dass** die einzelnen Kristallite in Schicht (I) einen Abstand voneinander von im zahlenmäßigen Mittel nicht über 25 nm aufweisen.

5. Folie nach Anspruch 1, **dadurch gekennzeichnet, dass** sie eine oder mehrere weitere polyamidhaltige Schichten enthält.

6. Folie nach einem der vorherigen Ansprüche, **dadurch gekennzeichnet, dass** eine oder mehrere Schichten (I) und/oder eine oder mehrere weitere polyamidhaltige Schichten Polyamid enthalten, das zu wenigstens 90 Gewichtsprozent aus ε-Caprolactam gebildet ist.

7. Folie nach einem der vorherigen Ansprüche, **dadurch gekennzeichnet, dass** Schicht (I) eine Außenschicht der Folie bildet.

8. Folie nach einem der vorherigen Ansprüche, **dadurch gekennzeichnet, dass** sie eine ein- oder mehrschichtige heißsiegelbare Siegelschicht auf einer Außenseite enthält.

9. Folie nach einem der vorherigen Ansprüche, **dadurch gekennzeichnet, dass** sie eine oder mehrere EVOH-haltige Schicht(en) enthält.

10. Folie nach einem der vorherigen Ansprüche, **dadurch gekennzeichnet, dass** sie eine oder mehrere weitere polymere Schicht(en) oder zwischen zwei Schichten eine Schicht aus einem Metall oder Metalloxid oder eine Bedruckung enthält.

11. Folie nach einem der vorherigen Ansprüche, **dadurch gekennzeichnet, dass** wenigstens eine Schicht (I) eine Flachfolie ist, deren Herstellung mindestens die folgenden Schritte umfaßt:
- Aufschmelzen der Polymere und Ausformung der Polymerschmelze durch eine Breitschlitzdüse
- Abkühlung der Polymerschmelze und Erstarrung zu einer festen Folie auf einer rotierenden Walze, die eine Temperatur von höchstens 70°C aufweist, über eine Zeit von wenigstens 0,1 Sekunden.

12. Verfahren zur Herstelung einer Tiefziehfolie, enthaltend wenigstens eine Schicht (I) aus Polyamid, die eine Flachfolie ist und feste anisotrope Füllstoffe (A) enthält, **dadurch gekennzeichnet, dass** die Herstellung der Schicht (I) mindestens die folgenden Schritte umfaßt:
- Aufschmelzen der Polymere und Ausformung der Polymerschmelze durch eine Breitschlitzdüse
- Abkühlung der Polymerschmelze und Erstarrung zu einer festen Folie auf einer rotierenden Walze, die eine Temperatur von höchstens 70°C aufweist, über eine Zeit von wenigstens 0,1 Sekunden.

13. Verwendung einer Folie gemäß einem der Ansprüche 1 bis 11 zur Herstellung von Containern auf Form-Füll-Siegel-Maschinen.

14. Verwendung einer Folie gemäß einem der Ansprüche 1 bis 11 zur Verpackung von Lebensmitteln.
